# EUROPEAN PATENT APPLICATION

(11) **EP 3 306 570 A1**
(43) Date of publication of application: **11.04.2018**
(21) Application number: 17177555.4
(22) Date of filing: 23.06.2017
(51) Int. Cl.: G06T 15/00, G06T 11/40

(54) **METHOD AND APPARATUS FOR PROCESSING IMAGE DATA**

(30) Priority: 07.10.2016 KR 20160129870
(71) Applicant: Samsung Electronics Co., Ltd., Gyeonggi-do 16677 (KR)
(72) Inventor: KWON, Kwon-taek, 18456 Hwaseong-si, Gyeonggi-do (KR); JANG, Choon-ki, 14017 Anyang-si, Gyeonggi-do (KR)
(74) Representative: Kuhnen & Wacker Patent- und Rechtsanwaltsbüro PartG mbB

(57) **Abstract**

Provided are an image data processing method and apparatus for determining operations to be performed according to components to display a current pixel, determining pixel values according to the determined operations, and displaying the current pixel.

## Description

### BACKGROUND

### 1. Field

The present disclosure relates to methods, apparatuses, systems and/or non-transitory computer readable media for processing image data.

### 2. Description of the Related Art

High-performance graphics cards have been used to generate computer composite images. As processing resources have increased, video graphics controllers have been developed to perform several functions associated with central processing units (CPU).

In particular, with the advancement of the computer game industry, higher graphical processing performance has been demanded. Furthermore, as the complexity of the images and/or videos used in various advertisements, movies, etc., as well as the computer game industry have increased, higher graphical processing performance has been demanded. In this connection, the term 'graphical processing unit (GPU)' has been used as a concept for a graphics processor to be differentiated from an existing CPU.

In a graphical processing process, rendering or shading of images and/or video is performed, and a compiler, a register, or the like, are used.

### SUMMARY

Provided are methods, apparatuses, systems and/or non-transitory computer readable media for reducing the computational amount according to a display method when shading is performed.

Additional aspects will be set forth in part in the description which follows and, in part, will be apparent from the description, or may be learned by practice of the presented example embodiments.

According to an aspect of at least one example embodiment, a method of processing image data includes receiving, using at least one processor, a plurality of image data inputs to be used to perform three-dimensional (3D) shading, determining, using the at least one processor, at least one color component to be used to display a current pixel among a plurality of color components to be used to determine color values of subpixels associated with the current pixel based on the received plurality of image data inputs, determining, using the at least one processor, a value of the at least one color component by using at least one operation among a plurality of operations for the plurality of image data inputs, the at least one operation associated with the at least one color component, and displaying, using the at least one processor, the current pixel by using the color value of the at least one color component on a display device.

The determining of the value of the at least one component may include obtaining a plurality of operations to be used to perform shading on the current pixel; performing marking on operations to be used to display only the other components among the plurality of obtained operations; and determining the value of the at least one component by using the other non-marked operations among the plurality of obtained operations.

The value of the at least one component may be determined using a combined thread obtained by combining a thread for displaying the current pixel and a thread for displaying a neighboring pixel adjacent to the current pixel.

The plurality of components may include a red component, a green component, and a blue component. The current pixel may include the red component and the green component. The neighboring pixel may include the blue component and the green component.

The at least one component may include the red component and the green component.

The displaying of the current pixel may include displaying the current pixel according to a pentile display method.

The pentile display method may include at least one of an RGBG pentile display method and an RGBW pentile display method.

The plurality of components may further include at least one of a transparency component and a brightness component.

The plurality of components may include a red component, a green component, a blue component, and a brightness component. The current pixel may include the red component and the green component. The neighboring pixel may include the blue component and the brightness component.

The shading may include at least one of vertex shading and fragment shading.

According to another aspect of at least one example embodiment, an image data processing apparatus includes at least one processor configured to receive a plurality of image data inputs to be used to perform three-dimensional (3D) shading, determine at least one color component to be used to display a current pixel among a plurality of color components to be used to determine values of a plurality of subpixels associated with the current pixel based on the received plurality of image data inputs, and determine a value of the at least one color component by using at least one operation among a plurality of operations for the plurality of image data inputs, excluding operations for color components other than the at least color one component, and a display device configured to display the current pixel by using the value of the at least one color component.

According to another aspect of at least one example embodiment, there is provided a non-transitory computer-readable recording medium recorded thereon a program causing a computer to perform the above method.

According to another aspect of at least one example embodiment, there is provided a method of performing three-dimensional (3D) processing of image data, the method including receiving, using at least one processor, image data inputs related to an image to be 3D shaded, the image data inputs including data related to color components associated with at least one pixel of the image data and a first shader and a second shader, determining, using the at least one processor, which of the color components are necessary to display the at least one pixel based on the second shader, selecting, using the at least one processor, at least one operation of a plurality of operations associated with the second shader based on the determined necessary color components of the second shader, generating, using the at least one processor, a combined shader based on the first shader and the second shader, the combined shader including the selected at least one operation, shading, using the at least one processor, the at least one pixel based on the combined shader, and displaying, using the at least one processor, the shaded at least one pixel on a display device.

### BRIEF DESCRIPTION OF THE DRAWINGS

These and/or other aspects will become apparent and more readily appreciated from the following description of the example embodiments, taken in conjunction with the accompanying drawings in which:
FIG. 1 is a diagram illustrating a graphics processing apparatus according to at least one example embodiment;
FIG. 2 is a diagram illustrating a process of processing three-dimensional (3D) graphics, performed by a graphics processing apparatus, according to at least one example embodiment;
FIG. 3 is a block diagram illustrating a structure and operation of an image data processing apparatus according to at least one example at least one example embodiment;
FIG. 4 is a flowchart illustrating displaying a current pixel by determining at least one component for displaying the current pixel, performed by an image data processing apparatus, according to at least one example embodiment;
FIG. 5 is a flowchart illustrating determining values of components for displaying a current pixel by using some of a plurality of operations, performed by an image data processing apparatus, according to at least one example embodiment;
FIG. 6 is a diagram illustrating determining values of a pixel including a red component, a green component, and a transparency component, performed by an image data processing apparatus, according to at least one example embodiment;
FIG. 7 is a diagram illustrating determining values of a pixel including a green component, a blue component, and a transparency component, performed by an image data processing apparatus, according to at least one example embodiment;
FIG. 8 is a diagram illustrating determining values of a pixel including a red component, a green component, and a transparency component and a pixel including a blue component, a green component, and a transparency component through braiding, performed by an image data processing apparatus, according to at least one example embodiment;
FIG. 9 is a diagram illustrating determining values of a pixel including a red component and a green component and a pixel including a blue component and a green component through braiding, performed by an image data processing apparatus, according to at least one example embodiment;
FIG. 10 is a diagram illustrating displaying a current pixel and a neighboring pixel according to an RGBG pentile display method, performed by an image data processing apparatus, according to at least one example embodiment;
FIG. 11 is a flowchart illustrating performing linking by an image data processing apparatus, according to at least one example embodiment; and
FIG. 12 is a diagram illustrating displaying a current pixel and a neighboring pixel according to an RGBW pentile display method, performed by an image data processing apparatus, according to at least one example embodiment.

### DETAILED DESCRIPTION

Hereinafter, various example embodiments will be described in detail with reference to the accompanying drawings. These example embodiments are provided to particularly describe the technical ideas of the inventive concepts and are not intended to restrict the scope of the inventive concepts. It should be understood that all modifications easily derivable from the specification and these example embodiments by experts in this art fall within the scope of the inventive concepts.

It will be understood that the terms 'comprise' and/or 'comprising,' when used in this specification, specify the presence of stated features, integers, steps, operations, elements, and/or components, but do not preclude the presence or addition of one or more other features, integers, steps, operations, elements, components, and/or groups thereof.

It will be further understood that, although the terms 'first', 'second', 'third', etc., may be used herein to describe various elements, components, regions, layers and/or sections, these elements, components, regions, layers and/or sections should not be limited by these terms. These terms are only used to distinguish one element, component, region, layer or section from another element, component, region, layer or section. As used herein, the term 'and/or' includes any and all combinations of one or more of the associated listed items. Expressions such as 'at least one of,' when preceding a list of elements, modify the entire list of elements and do not modify the individual elements of the list.

The various example embodiments set forth herein are related to rendering methods, apparatuses, systems, and/or non-transitory computer readable media. Matters which are well-known to those of ordinary skill in the technical field to which these example embodiments pertain will not be described in detail below.

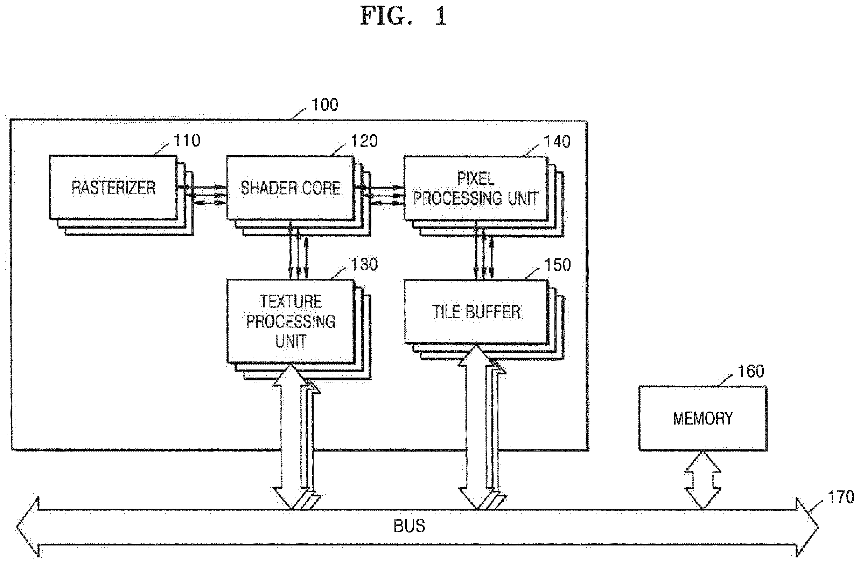

FIG. 1 is a diagram illustrating a graphics processing apparatus 100 according to at least one example embodiment. It would be apparent to those of ordinary skill in the art that the graphics processing apparatus 100 may include additional general-purpose components, as well as components illustrated in FIG. 1.

Referring to FIG. 1, the graphics processing apparatus 100 may include a rasterizer 110, a shader core 120, a texture processing unit 130, a pixel processing unit 140, a tile buffer 150, etc., but is not limited thereto. The graphics processing apparatus 100 may transmit data to or receive data from an external memory 160 via bus 170.

The graphics processing apparatus 100 is an apparatus for processing two-dimensional (2D) graphics and/or three-dimensional (3D) graphics, and may employ a tile-based rendering (TBR) method for rendering 3D graphics, but is not limited thereto. For example, in order to generate 3D graphics corresponding to a frame using the TBR method, the graphics processing apparatus 100 may process a plurality of tiles obtained by dividing the frame into equal parts and sequentially inputting them to the rasterizer 110, the shader core 120, and the pixel processing unit 140, etc., and store the results of the processing the plurality of tiles in the tile buffer 150. The graphics processing apparatus 100 may process all of the plurality of tiles of the frame in parallel by using a plurality of channels (e.g., datapaths for the processing of the graphics data), each of the channels including the rasterizer 110, the shader core 120, and the pixel processing unit 140, etc. After the plurality of tiles of the frame have been processed, the graphics processing apparatus 100 may transmit the results of the processing of the plurality of tiles stored in the tile buffer 150 to a frame buffer (not shown), such as a frame buffer located in the external memory 160, etc.

The rasterizer 110 may perform rasterization on a primitive generated by a vertex shader according to a geometric transformation process.

The shader core 120 may receive the rasterized primitive from the rasterizer 110 and perform pixel shading thereon. The shader core 120 may perform pixel shading on one or more tiles including fragments of the rasterized primitive to determine the colors of all of the pixels included in the tiles. The shader core 120 may use values of pixels obtained using textures to generate stereoscopic and realistic 3D graphics during the pixel shading.

The shader core 120 may include a pixel shader, but is not limited thereto. According to at least one example embodiment, the shader core 120 may further include a vertex shader, or the shader core 120 may be an integrated shader which is a combination of the vertex shader and the pixel shader, but the example embodiments are not limited thereto and the shader core may include lesser or greater constituent components. When the shader core 120 is capable of performing a function of the vertex shader, the shader core 120 may generate a primitive which is a representation of an object and transmit the generated primitive to the rasterizer 110.

When the shader core 120 transmits a request to the texture processing unit 130 to provide pixel values corresponding to one or more desired pixels, the texture processing unit 130 may provide values of pixels generated by the processing texture. The texture may be stored in an internal or external storage space (e.g., memory) of the texture processing unit 130, the external memory 160, etc., of the graphics processing apparatus 100. When the texture used to generate the values of the pixels requested by the shader core 120 is not stored in the internal storage space of the texture processing unit 130, the texture processing unit 130 may use the texture stored in the external space of the texture processing unit 130, the external memory 160, etc., but is not limited thereto.

The pixel processing unit 140 may determine all values of the pixels corresponding to one or more desired tiles by determining the values of pixels to be finally displayed (e.g., pixels that are determined to be displayed on a display device) by performing, for example, a depth test on the pixels corresponding to the same location on one tile and determining which of the pixels will be visible to a user of the display device.

The tile buffer 150 may store all of the values of the pixels corresponding to the tile received from the pixel processing unit 140. When the graphics processing of all of the values of the pixels corresponding to the one or more desired tiles are completed, the result of the performing of the graphics processing is stored in the tile buffer 150 and may be transmitted to the frame buffer of the external memory 160.

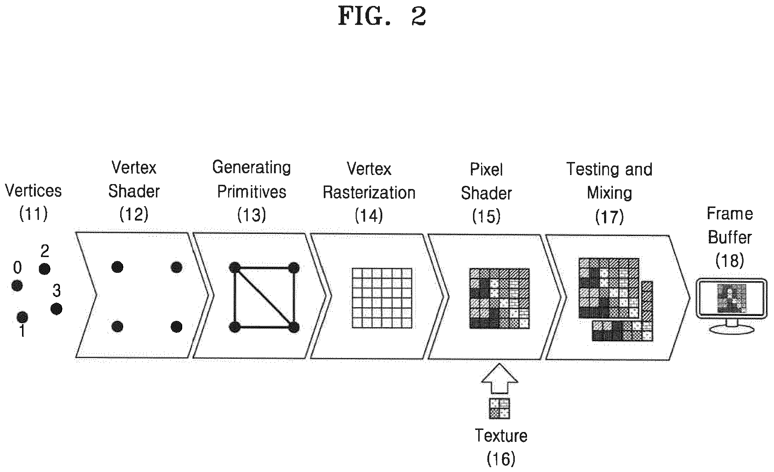

FIG. 2 is a diagram illustrating a process of processing 3D graphics, performed by the graphics processing apparatus 100 of FIG. 1, according to at least one example embodiment.

The process of processing 3D graphics may be generally divided into processes (e.g., sub-processes) for geometric transformation, rasterization, and pixel shading, as will be described in detail with reference to FIG. 2 below. FIG. 2 illustrates the process of processing 3D graphics, including operations 11 to 18, but the example embodiments are not limited thereto and may contain greater or lesser numbers of operations.

In operation 11, a plurality of vertices associated with image data to be processed (e.g., shaded, etc.) are generated. The generated vertices may represent objects included in the 3D graphics of the image data.

In operation 12, shading is performed on the plurality of vertices. The vertex shader may perform shading on the vertices by designating positions of the vertices (e.g., the 3D coordinates of each of the vertices) generated in operation 11.

In operation 13, a plurality of primitives are generated. The term 'primitive' refers to a basic geometric shape that can be generated and/or processed by a 3D graphics processing system, such as a dot, a line, a cube, a cylinder, a sphere, a cone, a pyramid, a polygon, or the like, and is generated using at least one vertex. For example, the primitive may be a triangle formed by connecting three vertices to one another.

In operation 14, rasterization is performed on the generated primitives. The performance of the rasterization on the generated primitives refers to the division of the primitives into fragments. The fragments may be basic data units for performing graphics processing on the primitives. Since the primitives include only information regarding the vertices, 3D graphics processing may be performed on the image data by generating fragments between the vertices during the rasterization process.

In operation 15, shading is performed on a plurality of pixels. The fragments of the primitives generated by rasterization may be a plurality of pixels constituting at least one tile. In the 3D graphics processing filed, the terms 'fragment' and 'pixel' may be interchangeably used. For example, a pixel shader may be referred to as a fragment shader. In general, basic units (e.g., data units) for processing graphics constituting a primitive may be referred to as fragments, and basic units for processing graphics when pixel shading and processes subsequent thereto are performed may be referred to as pixels. Through pixel shading, the color(s) of the one or more pixels may be determined. Thus, determining a value of a pixel may be understood as determining a value of a fragment in some cases.

In operation 16, texturing is performed to determine the colors of the pixels (e.g., determine color information related to the pixel). The texturing is a process of determining colors of pixels by using texture, the texture being an image that is prepared beforehand. In other words, a texture refers to an image that is applied and/or mapped to the surface of a 3D shape, such as a primitive, polygon, etc. When the colors of the pixels are calculated and determined to represent various colors and patterns of a real world image and/or other desired image, the amount of data calculation for graphics processing and a graphics processing time increase. Thus, the colors of the pixels are determined using the texture. For example, the colors of the pixels are determined by storing colors of a surface of an object in the form of texture, where the texture may be an additional two-dimensional (2D) image, and increasing or decreasing the size of the texture based on the object that the texture is being applied to, such as the location and size of the object on a display screen, etc., or by mixing texel values by using textures having various resolutions and then applying the mixed texel values to the object.

More specifically, in order to process 3D graphics more quickly during pixel shading, the values of the pixels generated from the texture may be used. For example, the values of the pixels may be generated by preparing a plurality of textures having different resolutions and mixing them to correspond adaptively to the size of the object. In this case, the plurality of textures which have different resolutions and are prepared are referred to as a mipmap (e.g., image data that includes an optimized sequence of a plurality of images, each of the successive images being a lower resolution representation, and/or reduced detail version, of the original image). According to at least one example embodiment, in order to generate values of pixels of an object having an intermediate resolution between two prepared mipmaps, the values of the pixels of the object may be generated by extracting texel values on a location corresponding to the object from the two mipmaps and filtering the texel values.

In operation 17, testing and mixing are performed. Values of pixels corresponding to at least one tile may be determined by determining the values of pixels to be finally displayed on a display device by performing a process such as a depth test on values of the one or more pixels corresponding to the same location on the tile. A plurality of tiles generated through the above process may be mixed to generate 3D graphics corresponding to one frame.

In operation 18, the frame generated through operations 11 to 17 is stored in the frame buffer, and displayed on a display device according to at least one example embodiment.

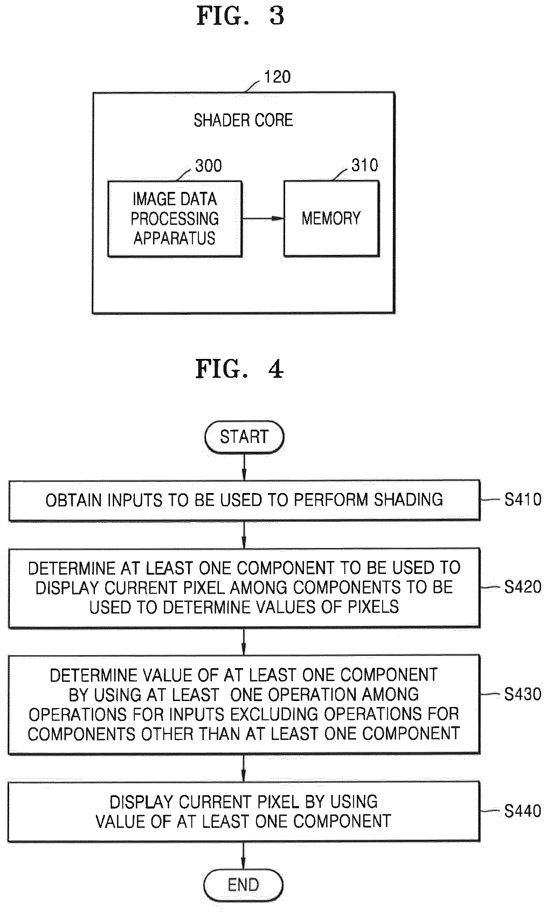

FIG. 3 is a block diagram illustrating a structure and operation of an image data processing apparatus 300 according to at least one example embodiment.

According to the various example embodiments, a vertex and a pixel may be basic data units for graphics processing.

Furthermore, a shader according to at least one example embodiment may be understood as a type of a software program provided in a programming language for graphics processing (e.g., rendering one or more pixels), such as a programming language associated with the instruction set of the GPU, CPU, etc., but is not limited thereto. The shader program may perform various shading operations on 2D and/or 3D objects, such as controlling lighting, shading, coloring, etc., effects associated with one or more pixels of an image. Examples of shading effects may include computing the color information, brightness, and/or darkness (e.g., shadow), of 2D and/or 3D objects based on one or more programmed light sources of the image, altering the hue, saturation, brightness and/or contrast components of an image, blurring an image, adding light bloom, volumetric lighting, bokeh, cel shading, posterization, bump mapping, distortion, chroma keying, edge detection, motion detection, and/or other effects to pixels of an image. Additionally, the shader may be provided as a specially configured (and/or specially programmed) hardware processing device.

Referring to FIG. 3, according to at least one example embodiment, the image data processing apparatus 300 may be included in a shader core 120, but the example embodiments are not limited thereto. For example, it would be apparent to those of ordinary skill in the art that the shader core 120 may further include other general-purpose elements in addition to the elements illustrated in FIG. 3.

The image data processing apparatus 300 according to at least one example embodiment may obtain a plurality of inputs to be used to perform shading.

In at least one example embodiment, the image data processing apparatus 300 may obtain data regarding at least one vertex. For example, the image data processing apparatus 300 may receive coordinate data (e.g., 3D coordinate data) of attribute data of at least one vertex of a primitive to be processed via a pipeline, or the like, from the outside of the image data processing apparatus 300 (e.g., an external source).

In at least one example embodiment, the image data processing apparatus 300 may obtain data regarding a fragment. For example, the image data processing apparatus 300 may receive data regarding a fragment to be processed from the rasterizer 110 of FIG. 1.

In at least one example embodiment, the image data processing apparatus 300 may obtain a value obtained by performing vertex shading. For example, the image data processing apparatus 300 may obtain a varying value obtained by performing vertex shading on attribute values given with respect to the vertex.

The image data processing apparatus 300 according to at least one example embodiment may determine at least one component (e.g., a color component, such as a RGB (red-green-blue), RGBG (red-green-blue-green), RGBW (red-green-blue-white), and/or CMYK (cyan-magenta-yellow-black), etc., color component) to be used to display a current pixel among a plurality of color components to be used to determine color values of pixels (e.g., subpixels associated with the current pixel).

A plurality of components (e.g., color components) may be used to determine values of the pixels or values of the fragments. For example, the plurality of components (e.g., color components) may include, for example, at least one among a red component, a green component, a blue component, a transparency component, and a brightness component, etc.

Some or all of the plurality of components used to determine values of pixels or values of fragments may be used to display the current pixel.

For example, when the plurality of components include the red component, the green component, and the blue component, all of the red components, the green components, and the blue components may be used to display the current pixel. In this case, all of the red components, the green components, and the blue components may be used to determine values of the current pixel using a RGB color model.

As another example, when the plurality of components include the red component, the green component, and the blue component, e.g., RGB, the system may use only the red component and the green component among the plurality of components to determine the values of the current pixel. Additionally, in another example, the system may use only the blue component and the green component among the plurality of components to determine the values of the current pixel. In this case, according to at least one example embodiment, an image may be displayed according to an RGBG pentile display method (RG:BG) on a pentile display device, but the example embodiments are not limited thereto and may be displayed according to other display technologies.

As another example, when the plurality of components include the red component, the green component, the blue component, and the transparency component (e.g., using the RGBA (red-green-blue-alpha) color model), the system may use all of the red component, the green component, the blue component, and the transparency component to determine the values of the current pixel.

As another example, when the plurality of components include the red component, the green component, the blue component, and the transparency component, only the red component, the green component, and the transparency component among the plurality of components may be used to determine the values of the current pixel. Additionally, only the blue component, the green component, and the transparency component among the plurality of components may be used to determine the values of the current pixel (e.g., RGA:BGA).

According to at least one example embodiment, either the red component and the green component or the blue component and the brightness component may be used to display the current pixel. In this case, according to at least one example embodiment, an image may be displayed according to an RGBW pentile display method and/or technique (RG:BW) on a pentile display device.

According to at least one example embodiment, either the red component, the green component, and the brightness component, or the blue component and the brightness component may be used to display the current pixel (e.g., RGA:BA).

According to at least one example embodiment, either the red component and the green component, or the blue component may be used to display the current pixel. In this case, the brightness of the current pixel or the brightness of a neighboring pixel of the current pixel may be determined according to values of the red component, the green component, and the blue component (e.g., RG:B).

According to at least one example embodiment, either the red component, the green component, and the brightness component, or the red component, the green component, the blue component, and the brightness component may be used to display the current pixel (e.g., RGA:RGBA).

According to at least one example embodiment, either the red component and the green component, or the red component, the green component, and the blue component may be used to display the current pixel (e.g., RG:RGB).

The image data processing apparatus 300 according to at least one example embodiment may determine components to be used to display the current pixel among the plurality of components to be used to determine values of pixels, according to a display method. According to at least one example embodiment, when the display method is the RGBG pentile display method and the red component and the green component are used to display the current pixel, the image data processing apparatus 300 may determine the red component and the green component to be used to display the current pixel among the red component, the green component, and the blue component. Additionally, when the green component and the blue component are used to display the current pixel, the image data processing apparatus 300 may determine the green component and the blue component to be used to display the current pixel among the red component, the green component, and the blue component. As another example, when the display method is the RGBW pentile display method and the red component and the green component are used to display the current pixel, the image data processing apparatus 300 may determine the red component and the green component to be used to display the current pixel among the red component, the green component, the blue component, and the brightness component. Additionally, when the blue component and the brightness component are used to display the current pixel, the image data processing apparatus 300 may determine the blue component and the brightness component to be used to display the current pixel among the red component, the green component, the blue component, and the brightness component.

The image data processing apparatus 300 according to at least one example embodiment may determine a value of at least one component by using at least one operation to be used to display the current pixel among a plurality of operations for a plurality of inputs.

The image data processing apparatus 300 according to at least one example embodiment may obtain a plurality of operations (e.g., 3D processing operations and/or algorithms) for a plurality of inputs. For example, the image data processing apparatus 300 may receive and/or generate a plurality of 3D processing operations (e.g., clipping operations, lighting operations, transparency operations, texture mapping operations, dithering operations, filtering operations, fogging operations, shading operations, Gourad shading operations, etc.) to be used to process data regarding at least one vertex or data regarding at least one fragment.

For example, the image data processing apparatus 300 may obtain data regarding at least one fragment from the rasterizer 110 and obtains a plurality of operations for processing the data regarding the fragment. For example, the plurality of operations may include an operation related to, for example, some or all of the color components of the fragment and/or pixel, such as the red component, the green component, the blue component, the transparency component, the brightness component, etc., of the fragment and/or pixel.

According to at least one example embodiment, the image data processing apparatus 300 may obtain a plurality of operations, which are to be used to perform shading on obtained data regarding at least one vertex or at least one fragment, through a desired and/or predetermined function. For example, the image data processing apparatus 300 may receive data regarding a rasterized fragment, output at least one fragment or pixel value, and obtain a plurality of codes to be used to perform shading.

According to at least one example embodiment, the image data processing apparatus 300 may obtain a plurality of operations for determining pixel values or fragment values. The image data processing apparatus 300 may determine pixel values or fragment values through the plurality of operations. For example, the image data processing apparatus 300 may obtain a plurality of operations to be used during determination of values of a red component, a green component, and a blue component corresponding to a current pixel. The image data processing apparatus 300 according to at least one example embodiment may display the current pixel by using only some values (e.g., a subset of values) among the values of a plurality of components corresponding to the current pixel. For example, when a display (not shown) connected to the display image data processing apparatus 300 displays an image according to the RGBG pentile display method and only the red component and the green component are assigned to the current pixel, the image data processing apparatus 300 may display the current pixel by using and/or providing only the values of the red and green components among the values of the red component, the green component, and the blue component corresponding to the current pixel. In other words, according to some example embodiments, the image data processing apparatus 300 may transmit a subset of color component values of at least one pixel to a display device to cause the display device to reproduce the desired pixel color information on the display device.

The image data processing apparatus 300 according to at least one example embodiment may determine an operation to be used to display the current pixel among a plurality of operations for a plurality of inputs. For example, the image data processing apparatus 300 may determine at least one operation to be used to determine a value of a component for displaying the current pixel among the plurality of operations. Furthermore, the image data processing apparatus 300 may put a mark (e.g., an indicator, etc.) on the determined at least one operation or the other operations so that the determined at least one operation may be differentiated from the other operations.

The image data processing apparatus 300 according to at least one example embodiment may determine values of components, which are to be used to display the current pixel, by using an operation for displaying the current pixel among the plurality of operations for the plurality of inputs.

For example, when the display connected to the image data processing apparatus 300 displays an image according to the RGBG pentile display method and only the red and green components are assigned to the current pixel, the image data processing apparatus 300 may determine the values of the red and green components assigned to the current pixel by using only operations for determining the values of the red and green components among the plurality of operations associated with (and/or available to) the image data processing apparatus 300.

As another example, when the display connected to the image data processing apparatus 300 displays an image according to the RGBW pentile display method and only the blue component and the brightness component are assigned to the current pixel, the image data processing apparatus 300 may determine values of the blue component and the brightness component assigned to the current pixel by using only operations for determining the values of the blue component and the brightness component among the plurality of operations associated with (and/or available to) the image data processing apparatus 300.

A method of determining values of components to be used to display the current pixel, performed by the image data processing apparatus 300, according to at least one example embodiment is not limited to the example embodiments described above, and is applicable to all cases in which at least one among the red component, the green component, the blue component, the brightness component, and the transparency component are assigned to the current pixel.

The image data processing apparatus 300 according to at least one example embodiment may transmit determined values of components to a memory 310.

For example, the image data processing apparatus 300 may transmit pixel values for displaying the current pixel to the memory 310. In this case, the pixel values may include a value of at least one component assigned to the current pixel.

According to at least one example embodiment, the memory 310 may temporarily store data received from the image data processing apparatus 300.

The memory 310 may include at least one type of non-transitory storage medium among a flash memory type storage medium, a hard disk type storage medium, a multimedia card micro type storage medium, a card type memory (e.g., an SD or XD memory, etc.), a random access memory (RAM), a static RAM (SRAM), a read-only memory (ROM), an electrically erasable programmable ROM (EEPROM), a programmable ROM (PROM), a magnetic memory, a magnetic disc, and an optical disc, etc.

The memory 310 may serve as a type of buffer. For example, the memory 310 may temporarily store data regarding an image to be subsequently displayed while a current image is displayed.

According to at least one example embodiment, the memory 310 may be provided as an element of the image data processing apparatus 300. However, as illustrated in FIG. 3, the memory 310 according to at least one example embodiment may be provided as a separate element from the image data processing apparatus 300. Each of the image data processing apparatus 300 and the memory 310 may transmit data to or receive data from the other.

According to at least one example embodiment, a display (not shown) may display the current pixel by using a value of at least one component determined by the image data processing apparatus 300.

According to at least one example embodiment, the display may display the current pixel according to data received from the memory 310.

According to at least one example embodiment, the display may be provided as an element of the image data processing apparatus 300. However, as illustrated in FIG. 3, the display according to at least one example embodiment display may be provided as an element separate from the image data processing apparatus 300. Each of the image data processing apparatus 300 and the display may transmit data to and/or receive data from the other. In detail, the display may display components by receiving values thereof from the memory 310.

FIG. 4 is a flowchart illustrating displaying a current pixel by determining at least one component to be used to display the current pixel, performed by the image data processing apparatus 300 of FIG. 3, according to at least one example embodiment.

In operation S410, the image data processing apparatus 300 according to at least one example embodiment obtains a plurality of inputs to be used to perform the shading. For example, the image data processing apparatus 300 obtains a plurality of inputs to be used to perform shading on at least one desired pixel, such as the current pixel and/or a neighboring pixel of the current pixel.

The image data processing apparatus 300 according to at least one example embodiment may obtain data regarding at least one vertex or data regarding at least one fragment as at least one of the plurality of inputs. For example, the image data processing apparatus 300 may receive the data regarding the fragment from the rasterizer 110 of FIG. 1, but is not limited thereto. As another example, the image data processing apparatus 300 may obtain a varying value as shading is performed on at least one vertex attribute.

Regarding the obtaining of the plurality of inputs used to perform shading performed by the image data processing apparatus 300, in operation S410, the above description with reference to FIG. 3 may be referred to, but the example embodiments are not limited thereto.

In operation S420, the image data processing apparatus 300 according to at least one example embodiment determines at least one component to be used to display the current pixel among a plurality of components to be used to determine values of pixels.

Some or all of the plurality of components to be used to determine values of pixels and/or fragments values may be used to display the current pixel. For example, at least one of a red component, a green component, a blue component, a transparency component, and a brightness component may be used to display the current pixel.

The image data processing apparatus 300 according to at least one example embodiment may differentiate components assigned to display the current pixel among the plurality of components from the other components on the basis of a display method employed by a display (not shown) or the like. For example, according to at least one example embodiment, when the display device displays an image according to the RGBG pentile display method, the image data processing apparatus 300 according to at least one example embodiment may determine that the components assigned to (and/or necessary to) display the current pixel are a subset of the plurality of the components available to the display device, such as the red component and the green component. As another example, according to at least one example embodiment, when the display displays an image according to the RGBG pentile display method, the image data processing apparatus 300 according to at least one example embodiment may determine that components assigned to (and/or necessary to) display the current pixel are only the blue component and the green component.

For the determining of the at least one component to be used to display the current pixel, performed by the image data processing apparatus 300, in operation S420, the above description with reference to FIG. 3 may be referred to, but the example embodiments are not limited thereto.

In operation S430, the image data processing apparatus 300 according to at least one example embodiment determines a value of at least one component by using at least one operation among a plurality of operations for a plurality of inputs, excluding operations for components other than the at least one component.

The image data processing apparatus 300 according to at least one example embodiment may obtain the plurality of operations for the plurality of inputs. For example, the image data processing apparatus 300 may receive and/or generate a plurality of operations to be used to process data regarding at least one vertex and/or data regarding at least one fragment.

The plurality of operations may include operations for determining values of components corresponding to a pixel displayed.

For example, the plurality of operations may include an operation for determining at least one among values of the red component, the green component, the blue component, the transparency component, and the brightness component. As another example, when the display method is the RGBG pentile display method, the plurality of operations may include an operation for determining at least one among the values of the red component, the green component, and the blue component. As another example, when the display method is the RGBW pentile display method, the plurality of operations may include an operation for determining at least one among the values of the red component, the green component, the blue component, and the brightness component.

The image data processing apparatus 300 according to at least one example embodiment may determine at least one operation among the plurality of obtained operations, excluding operations for components which are not assigned to the current pixel. The image data processing apparatus 300 according to at least one example embodiment may determine at least one operation among the plurality of obtained operations, excluding some or all of the operations for the components which are not assigned to the current pixel.

For example, if the components assigned to the current pixel are the red component and the green component, and the components assigned to a neighboring pixel of the current pixel are the blue component and the green component, the operations to be used to determine the values of the red component and the green component for displaying the current pixel may be, for example, a first operation to a tenth operation, and operations to be used to determine values of the blue component and the green component for displaying the neighboring pixel may be, for example, an eleventh operation to a twentieth operation, then the image data processing apparatus 300 may determine the first to tenth operations as operations to be used to display the current pixel among the first to twentieth operations, excluding the eleventh to twentieth operations. However, the example embodiments are not limited thereto, and the number of operations may differ based on the GPU, CPU, operating system, 3D graphics processing software, etc.

According to at least one example embodiment, the image data processing apparatus 300 may determine at least one operation among the plurality of obtained operations excluding the operations related to only the components which are not assigned to the current pixel. For example, if components assigned to the current pixel are the red component and the green component, and the components assigned to a neighboring pixel of the current pixel are the blue component and the brightness component, the operations to be used to determine values of the red component and the green component may be the first operation to the fifteenth operation, and operations to be used to determine values of the blue component and the brightness component may be the eleventh operation to a thirtieth operation, then the image data processing apparatus 300 may determine the first to fifteenth operations as operations to be used to display the current pixel among the first to thirtieth operations, excluding the sixteenth to thirtieth operations. According to at least one example embodiment, if operations to be used to determine values of components assigned to the current pixel are the first operation to the fifteenth operation, operations to be used to determine values of components assigned to a neighboring pixel of the current pixel are the eleventh operation to the thirtieth operation, and the plurality of obtained operations are the first operation to a fortieth operation, then the image data processing apparatus 300 may determine the first to fifteenth operations and the thirty-first to fortieth operations as operations to be performed among the first to fortieth operations, excluding the sixteenth to thirtieth operations to be used to determine only the values of the components assigned to the neighboring pixel.

According to at least one example embodiment, the image data processing apparatus 300 may delete operations related to components which are not assigned to the current pixel among the plurality of obtained operations from a set of codes for determining values of the current pixel, and determine the values of the current pixel by using only the remaining operations. In other words, the image data processing apparatus 300 may not perform operations related to the color components that are not present in the current pixel, and determine the color values of the color components that are present in the current pixel based on the performed operations related to the color components that are present in the current pixel.

The image data processing apparatus 300 according to at least one example embodiment may determine values of components assigned to the current pixel by using at least one determined operation (and/or desired operation). The image data processing apparatus 300 deletes operations related to the components other than the at least one component determined in operation S420 from among operations to be used to perform shading on the current pixel among the plurality of components, and determines the values of components assigned to the current pixel by performing only the remaining operations.

For example, the image data processing apparatus 300 may put a mark (e.g., indicator, identifier, etc.) on operations to be used to determine values of components which are not assigned to the current pixel among operations included in a set of codes for shading the current pixel, and perform shading on the current pixel by performing the other operations on which the mark is not put (e.g., skip the operations that have been marked).

As another example, the image data processing apparatus 300 may put a mark on operations for displaying components assigned to the current pixel among operations included in a set of codes for displaying the current pixel, and determines the values of pixels for displaying the current pixel by performing only the marked operations.

For the determining of the value of the at least one component by using the at least one operation to be used to display the current pixel, performed by the image data processing apparatus 300, in operation S430, the above description with reference to FIG. 3 may be referred to, but the example embodiments are not limited thereto.

In operation S440, the image data processing apparatus 300 according to at least one example embodiment displays the current pixel by using the values (e.g., color values) of the at least one component (e.g., color component) determined in operation S430.

For example, when the current pixel includes the red component and the green component only, the image data processing apparatus 300 may display the current pixel according to the color values of the red and green components determined in operation S430.

When a display device (not shown) is not an element of the image data processing apparatus 300, the image data processing apparatus 300 may transmit the value of the at least one component determined in operation S430 to the display, and the display may display the current pixel according to the value of the at least one component.

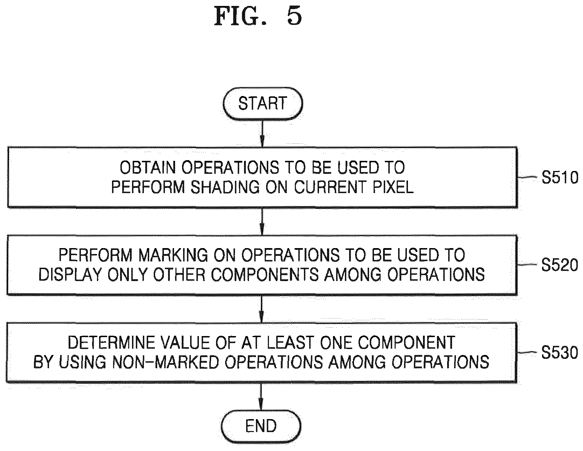

FIG. 5 is a flowchart illustrating the determination of the color values of the color components to be used to display a current pixel by using some of a plurality of operations, performed by the image data processing apparatus 300 of FIG. 3, according to at least one example embodiment.

In operation S510, the image data processing apparatus 300 according to at least one example embodiment obtains a plurality of operations (e.g., 3D graphics processing operations) to be used to perform the desired shading on the current pixel.

For example, the image data processing apparatus 300 according to at least one example embodiment may receive and/or generate a plurality of operations to be used to process data regarding at least one vertex and/or at least one frame corresponding to either the current pixel and/or a neighboring pixel adjacent to the current pixel.

According to at least one example embodiment, the image data processing apparatus 300 may receive and/or generate a plurality of operations to be used during the performance of vertex shading or fragment shading on the current pixel to be displayed (e.g., the desired pixel to be displayed).

According to at least one example embodiment, the image data processing apparatus 300 may obtain a set of codes including a plurality of operations to be used to determine a value (e.g., color value) of a fragment corresponding to the current pixel.

In operation S520, the image data processing apparatus 300 according to at least one example embodiment may perform marking on the one or more operations associated with the other components (e.g., the components that are not necessary of the current pixel to be displayed) among the plurality of operations obtained in operation S510.

The image data processing apparatus 300 according to at least one example embodiment may differentiate, from the plurality of operations obtained in operation S510, operations to be used to determine only the values of components among a plurality of components to be used to determine values of pixels except at least one component for displaying the current pixel. Furthermore, the image data processing apparatus 300 may put a mark on the operations (e.g., may select) to be used to determine only the values of the other components.

For example, when the plurality of operations obtained in operation S510 are, for example, a first operation to a thirtieth operation, the at least one component to be used to display the current pixel includes, for example, the first operation to a fifteenth operation, and the operations to be used to display only the other components (e.g., the components associated with the colors that are not present in the current pixel) are, for example, the eleventh operation to a twenty-fifth operation, the image data processing apparatus 300 may put a mark on the sixteenth to twenty-fifth operations.

Only some of a plurality of components corresponding to the current pixel may be used to display the current pixel (e.g., only a subset of the plurality of color components may be necessary to display the colors of the current pixel). For example, only a red component and a green component among the red component, the green component, and a blue component corresponding to the current pixel may be used to display the current pixel according to a display method employed by a display device (not shown). As another example, when the display method is the RGBG pentile display method and the components which are to be used to display the current pixel are the red component and the green component, the image data processing apparatus 300 may put a mark on an operation to be used to obtain only the value of the blue component among an operation for the value of the red component, an operation for the value of the green component, and the operation for the value of the blue component, which are performed related to the current pixel.

In operation S530, the image data processing apparatus 300 according to at least one example embodiment may determine a value of the at least one component by using the non-marked (e.g., unmarked, unselected, etc.) operations among the plurality of operations obtained in operation S510.

The image data processing apparatus 300 according to at least one example embodiment may determine values of components to be used to display the current pixel by performing the non-marked (e.g., unmarked, or unselected) operations among the plurality of operations obtained in operation S510 except the operations marked in operation S520.

The image data processing apparatus 300 according to at least one example embodiment may delete the operations marked in operation S520 from among the plurality of operations obtained in operation S510, and determine the values of the components to be used to display the current pixel by using only the non-deleted operations.

The image data processing apparatus 300 according to at least one example embodiment may put a first mark on the operations marked in operation S520 among the plurality of operations obtained in operation S510, put a second mark on the non-marked operations, and determine the values of the components to be used to display the current pixel by using only the operations marked with the second mark among the plurality of operations obtained in operation S510.

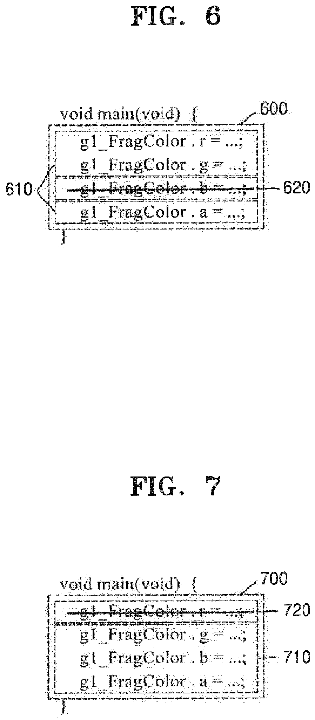

FIG. 6 is a diagram illustrating determining values of a pixel including a red component, a green component, and a transparency component, performed by an image data processing apparatus 300 of FIG. 3, according to at least one example embodiment.

A case in which components corresponding to a current pixel are the red component, the green component, the blue component, and the transparency component, and the components to be used to display the current pixel are the red component, the green component, and the transparency component will be described below. For example, the at least one example embodiment of FIG. 6 should be understood as using the RGBG pentile display method, however the example embodiments are not limited thereto.

Values of some (e.g., a subset) of a plurality of components may be used to display the current pixel or may not be used to display the current pixel according to a display method. For example, in the at least one example embodiment of FIG. 6, a value of the blue component related to the current pixel may be obtained through an operation but may not be used to display the current pixel.

Here, the components corresponding to the current pixel may include not only components to be used to display the current pixel but also components related to the current pixel.

The image data processing apparatus 300 according to at least one example embodiment may obtain a plurality of operations 600 for the current pixel. The plurality of operations 600 may include operations to be used to perform shading on the current pixel, etc.

Since the current pixel includes only the red component, the green component, and the transparency component according to the display method, the value of the blue component may not be used to display the current pixel. In this case, the image data processing apparatus 300 may delete an operation 620 to be used to determine only the value of the blue component (e.g., the operation only relates to the unused blue component), and determines the values of the current pixel by using non-deleted operations 610. Additionally, the image data processing apparatus 300 may put a mark on the operation 620 to be used to determine only the value of the blue component, and determine the values of the current pixel by using the non-marked operations 610 and skipping the marked operation.

The image data processing apparatus 300 according to at least one example embodiment may save resources (e.g., may save memory space, reduce the number of processor cycles consumed, reduce total processing time, save battery life for battery operated processing devices, etc.) that would be consumed the marked operation 620 was performed as is done by conventional GPUs, by determining the values of the current pixel and only using the non-marked operations 610.

FIG. 7 is a diagram illustrating the determination of the values of a pixel including a green component, a blue component, and a transparency component, performed by the image data processing apparatus 300 of FIG. 3, according to at least one example embodiment.

Assuming a case in which components corresponding to a current pixel are a red component, a green component, a blue component, and a transparency component, and components to be used to display the current pixel are the green component, the blue component, and the transparency component will be described below. For example, the at least one example embodiment of FIG. 7 should be understood as using the RGBG pentile display method, but the example embodiments are not limited thereto and may use other display methods and/or display device types.

Values of some of a plurality of components may be used to display the current pixel or may not be used to display the current pixel according to a display method. For example, in the embodiment of FIG. 7, a value of the red component for the current pixel may be obtained through an operation but may not be used to display the current pixel.

Here, the components corresponding to the current pixel may include not only the components to be used to display the current pixel, but also components related to the current pixel.

The image data processing apparatus 300 according to at least one example embodiment may obtain a plurality of operations 700 for the current pixel. The plurality of operations 700 may include operations to be used to perform shading, and/or other 3D graphics processing operations, on the current pixel.

Since the current pixel includes only the green component, the blue component, and the transparency component of the display method, the value of the red component is not necessary to display the current pixel. In this case, the image data processing apparatus 300 may delete an operation 720 for determining the value of the red component, and instead, determines the values of the current pixel by using the non-deleted operations 710. Additionally, the image data processing apparatus 300 may put a mark on (e.g., select) the operation 720 for determining the unused value of the red component, and may instead determine the values of the current pixel by using the non-marked operations 710.

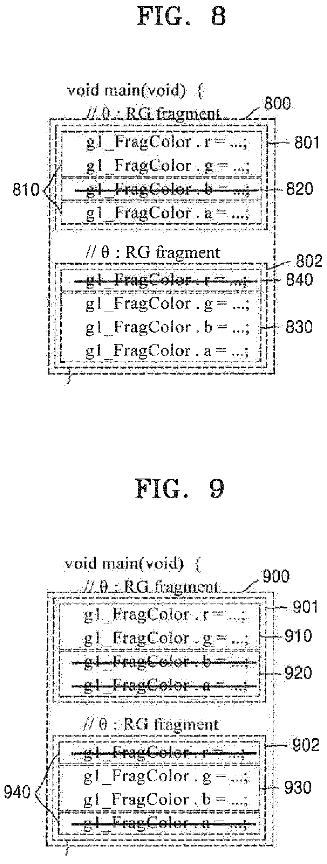

FIG. 8 is a diagram illustrating determining values of a pixel including a red component, a green component, and a transparency component and a pixel including a blue component, a green component, and a transparency component through braiding, performed by the image data processing apparatus 300 of FIG. 3, according to at least one example embodiment.

According to at least one example embodiment, a thread may include either a performance path in a process and/or a series of execution codes when computer readable instructions of a computer program are executed by at least one processor. For example, when a thread is executed, an instruction from a code block corresponding to the thread may be performed. As another example, when the thread is executed, a series of instructions for performing at least one operation may be performed. Here, the series of instructions may satisfy a single entry single exit (SESE) condition or a single entry multiple exit (SEME) condition.

A code block according to at least one example embodiment may be understood as including a set of consecutive computer readable instructions for performing at least one operation and/or a memory region storing consecutive computer readable instructions for performing at least one operation. For example, the code block may be a set of at least one instruction satisfying the SESE condition or the SEME condition or a memory region storing at least one instruction satisfying the SESE condition or the SEME condition. As another example, the thread may include a code bock which is a set of consecutive instructions for performing at least one operation.

The image data processing apparatus 300 according to at least one example embodiment may simultaneously perform a plurality of threads. The image data processing apparatus 300 according to at least one example embodiment may individually process a plurality of threads. The image data processing apparatus 300 according to at least one example embodiment may perform a plurality of code blocks by grouping them as one execution unit. According to at least one example embodiment, a warp may be a type of data processing unit. According to at least one example embodiment, a warp may include at least one thread. In at least one example embodiment, when the image data processing apparatus 300 performs a plurality of threads by grouping them as one execution unit, the plurality of threads grouped as one execution unit may be referred to as a warp. The image data processing apparatus 300 according to at least one example embodiment may operate in a single instruction multiple thread (SIMT) architecture.

In at least one example embodiment, the image data processing apparatus 300 may perform a plurality of code blocks included in a thread by grouping them as one execution unit.

According to at least one example embodiment in which a plurality of components to be used to determine values of pixels are a red component, a green component, a blue component, and a transparency component will be described with reference to FIG. 8 below.

For example, a first thread 801 may include at least one operation related to shading a current pixel and second thread 802 may include at least one operation related to shading a neighboring pixel adjacent to the current pixel, but the example embodiments are not limited thereto and other operations may be performed on other pixels and/or fragments.

The image data processing apparatus 300 according to at least one example embodiment may obtain a combined thread 800 which is a combination of threads, such as the first thread 801 and the second thread 802. For example, the combined thread 800 may be generated by combining the first thread 801 and the second thread 802 to be a single combined thread. The image data processing apparatus 300 according to at least one example embodiment may execute the combined thread 800 to obtain values of various desired pixels associated with the combined thread 800, such as the current pixel and a neighboring pixel. By combining the first thread 801 and the second thread 802 to be the combined thread 800, the first thread 801 and the second thread 802 may be executed as the same warp.

A case in which components to be used to display the current pixel are the red component, the green component, and the transparency component and the components to be used to display the neighboring pixel are the green component, the blue component, and the transparency component according to a display method will be described below.

The image data processing apparatus 300 according to at least one example embodiment may delete a blue-component operation 820, which is to be used to determine a value of the blue component which is not included in the current pixel, from among operations included in the first thread 801 including an operation for the current pixel. In this case, the image data processing apparatus 300 may determine values of the red component, the green component, and the transparency component of the current pixel by using operations 810 which are not deleted. Additionally, the image data processing apparatus 300 may perform marking on the blue-component operation 820. In this case, the image data processing apparatus 300 may determine the values of the red component, the green component, and the transparency component of the current pixel by using the operations 810 on which marking is not performed. Additionally, the image data processing apparatus 300 may perform second marking on the blue-component operation 820 and first marking on the operations 810 other than the blue-component operation 820. In this case, the image data processing apparatus 300 may determine values of the red component, the green component, and the transparency component by using the operations 810 on which first marking is performed.

In at least one example embodiment, the image data processing apparatus 300 may delete a red-component operation 840, which is to be used to determine the value of the red component which is not included in the neighboring pixel, from among operations included in the second thread 802 including an operation for the neighboring pixel. In this case, the image data processing apparatus 300 may determine values of the green component, the blue component, and the transparency component of the neighboring pixel by using operations 830 which are not deleted. Additionally, the image data processing apparatus 300 may perform marking on the red-component operation 840. In this case, the image data processing apparatus 300 determine values of the green component, the blue component, and the transparency component of the neighboring pixel by using the operations 830 on which marking is not performed.

In the execution of the combined thread 800, the image data processing apparatus 300 according to at least one example embodiment may determine the values of the current pixel and the neighboring pixel by using operations other than the blue-component operation 820 and the red-component operation 840.

According to at least one example embodiment, the combined thread 800 may correspond to a certain code block. In this case, the image data processing apparatus 300 according to at least one example embodiment may access the code block corresponding to the combined thread 800 to obtain the values of the current pixel and the neighboring pixel. According to at least one example embodiment, when the image data processing apparatus 300 uses the same code block to obtain the values of the current pixel and the neighboring pixel, regional characteristics of a memory may be used.

The image data processing apparatus 300 according to at least one example embodiment may determine the values of the red component, the green component, and the transparency component by using the operations 810 on which marking is not performed, and determine the values of the green component, the blue component and the transparency component of the neighboring pixel by using the operations 830 on which marking is not performed, thereby saving resources to be consumed to perform the blue-component operation 820 and the red-component operation 840.

FIG. 9 is a diagram illustrating determining values of a pixel including a red component and a green component and a pixel including a blue component and a green component through braiding, performed by the image data processing apparatus 300 of FIG. 3, according to at least one example embodiment.

According to at least one example embodiment in which a plurality of components on which operations are to be performed are a red component, a green component, a blue component, and a transparency component will be described with reference to FIG. 9 below.

A first thread 901 may include an operation related to shading a current pixel. A second thread 902 may include an operation related to shading a neighboring pixel adjacent to the current pixel.

The image data processing apparatus 300 according to at least one example embodiment may obtain a combined thread 900 which is a combination of the first thread 901 and the second thread 902. For example, the combined thread 900 may be generated by combining the first thread 901 and the second thread 902 to be a thread. The image data processing apparatus 300 according to at least one example embodiment may execute the combined thread 900 to obtain the values of both the current pixel and the neighboring pixel.

A case in which components to be used to display the current pixel are the red component and the green component and components to be used to display the neighboring pixel are the green component and the blue component according to a display method will be described below.

The image data processing apparatus 300 according to at least one example embodiment may delete operations 920, which are to be used to determine values of the blue component and the transparency component which are not included in the current pixel, or perform marking on the operations 920 among operations included in the first thread 901 including an operation for the current pixel. In this case, the image data processing apparatus 300 may determine the values of the red component and the green component of the current pixel by using operations 910 which are not deleted or on which marking is not performed.

In at least one example embodiment, the image data processing apparatus 300 may delete operations 940, which are to be used to determine the values of the red component and the transparency component which are not included in the neighboring pixel, or perform marking on the operations 940 among operations included in the second thread 902 including an operation for the neighboring pixel. In this case, the image data processing apparatus 300 may determine the values of the green component and the blue component of the neighboring pixel by using operations 930 which are not deleted or on which marking is not performed.

In the execution of the combined thread 900, the image data processing apparatus 300 according to at least one example embodiment may determine the values of the current pixel and the neighboring pixel by using operations which are not deleted or on which marking is not performed.

The at least one example embodiment of FIG. 9 may correspond to a case in which transparency is not used to determine values of pixels, included in the embodiment of FIG. 8.

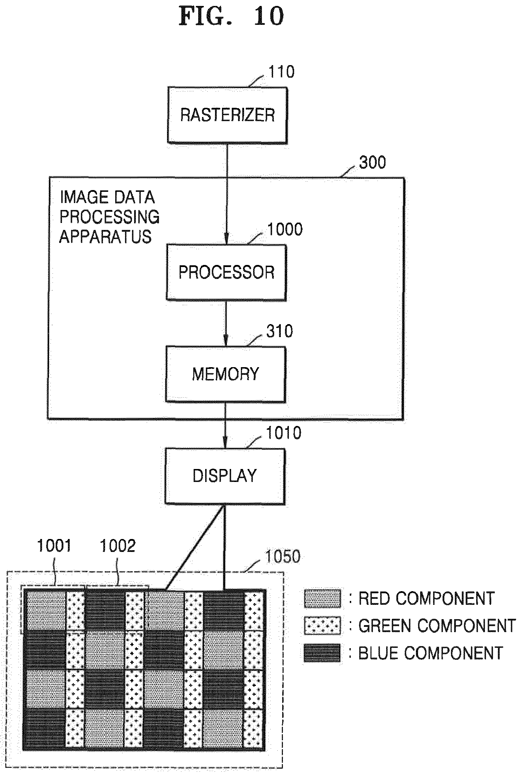

FIG. 10 is a diagram illustrating displaying a current pixel 1001 and a neighboring pixel 1002 according to the RGBG pentile display method, performed an image data processing apparatus 300, according to at least one example embodiment.

Referring to FIG. 10, the image data processing apparatus 300 may include at least one processor 1000 and a memory 310, but is not limited thereto and may contain more or less constituent components.

According to at least one example embodiment, the at least one processor 1000 may receive data regarding a fragment from a rasterizer 110. For example, the processor 1000 may receive data regarding at least one color component based on the display method of the display device, for example at least one component among a red component, a green component, a blue component, a transparency component, and a brightness component, to be used to determine values of pixels.

According to at least one example embodiment, the processor 1000 may delete operations for determining values of components which are not used to display at least one desired pixel (and/or fragment), such as the current pixel 1001, or at least one neighboring pixel 1002, or perform marking on the operations among a plurality of 3D processing operations, such as operations to be used during the performance of vertex shading and/or fragment shading on the current pixel 1001 or the neighboring pixel 1002. Additionally, the processor 1000 may determine values of at least one desired pixel (and/or fragment), such as the current pixel 1001, or values of at least one neighboring pixel 1002, by using operations which are not deleted or on which marking is not performed among the plurality of operations. Additionally, the processor 1000 may perform operations included in a combined thread including a plurality of threads each thread executing at least one operation associated with at least one desired pixel (and/or fragment), such as a first thread having an operation for the current pixel 1001 and a second thread having an operation for the neighboring pixel 1002, to determine the values of the current pixel 1001 and the neighboring pixel 1002.

For example, when the current pixel 1001 includes the red component and the green component, the processor 1000 may delete an operation to be used to determine only a value of the blue component of the current pixel 1001 among operations included in the first thread, and determine values of the red component and the green component of the current pixel 1001 by using non-deleted operations. When the neighboring pixel 1002 includes the blue component and the green component, the processor 1000 may delete an operation to be used to determine only a value of the red component of the neighboring pixel 1002 among operations included in the second thread, and determine values of the blue component and the green component of the neighboring pixel 1002 by using non-deleted operations.

According to at least one example embodiment, the processor 1000 may generate a warp. The processor 1000 may use regional characteristics of a memory by generating a warp during fragment shading. For example, the processor 1000 may combine threads for processing the current pixel 1001 and the neighboring pixel 1002 to be executed as the same warp to control a processing method such that that the same warp is used to process adjacent pixels, thereby using the regional characteristics of the memory. Furthermore, the processor 1000 may determine one shader among a plurality of shaders on the basis of the 3D processing operations required by the pixels, such as selecting a shader based on whether blending is needed or not. For example, the processor 1000 may select a shader for calculating the red component, the green component, the transparency component, the blue component, the green component, and the transparency component (RGABGA) with respect to two fragments to be blended. As another example, when blending is not needed, the processor 1000 may select a different shader for calculating the red component, the green component, the blue component, and the green component (RGBG) with respect to the two fragments.

When a fragment shader requires many resources, including for example, a register and/or a memory, e.g., even when the pentile display method is used, two fragments may not be capable of being operated as one thread. In this case, the processor 1000 may designate the shader for calculating the red component, the green component, the blue component, and the green component (RGBG) with respect to one fragment according to a result of an analysis performed by a compiler.

Blending may be optimized for various color components, such as the red component and the green component (RG) and/or the blue component and the green component (BG).

The values of the components of either the current pixel 1001 and/or the neighboring pixel 1002 which are determined by the processor 1000 may be stored in the memory 310. For example, the values of the neighboring pixel 1002 may be stored in the memory 310 while the current pixel 1001 is displayed.

A display device 1010 may display the current pixel 1001 or the neighboring pixel 1002 by receiving the values of the components stored in the memory 310. For example, the display device 1010 may display a 4x4 pixel screen 1050 according to the RGBG pentile display method, but the example embodiments are not limited thereto and the display device may include a greater or lesser pixel screen and may use alternate display methods, particularly alternate subpixel arrangements, such as RGB stripe arrangements, etc.

According to at least one example embodiment, the processor 1000 may perform vertex shading as well as fragment shading.

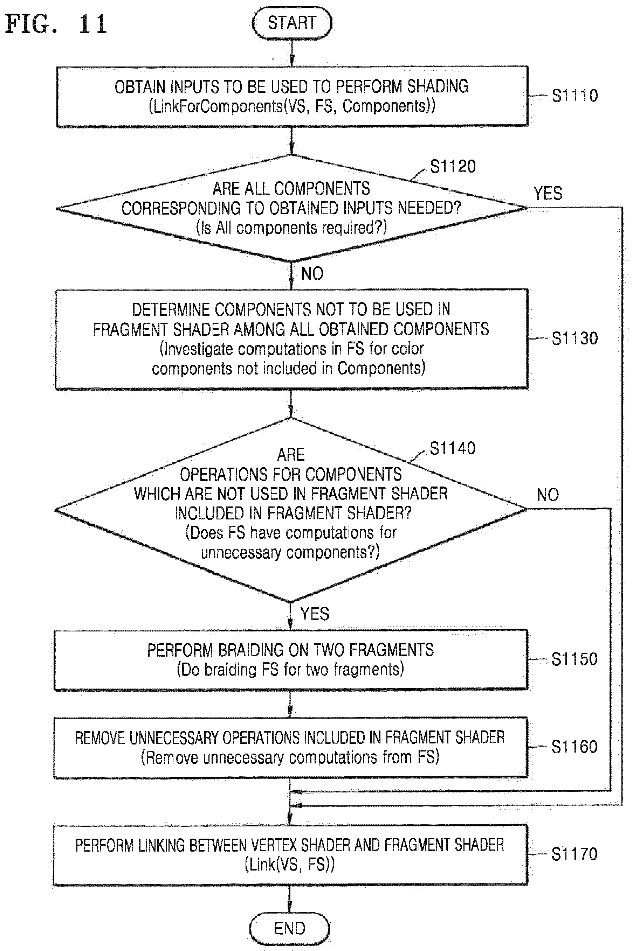

FIG. 11 is a flowchart illustrating performing linking by the image data processing apparatus 300 of FIG. 10, according to at least one example embodiment.

Linking should be understood as including a method of connecting a vertex shader and a fragment shader to each other when image data is processed.

The image data processing apparatus 300 according to at least one example embodiment may link a fragment shader to a vertex shader which provides all of the inputs that the fragment shader needs. For example, a first fragment shader may receive, from a first vertex shader, data regarding all color components to be received from the vertex shader, the first fragment shader and the first vertex shader may be linked to each other. In this case, when the first vertex shader provides a larger amount of data than the amount of data needed by the first fragment shader, the image data processing apparatus 300 may perform optimization by removing some unnecessary data and/or operations from the inputs to be transmitted to the fragment shader.

The image data processing apparatus 300 according to at least one example embodiment may generate one shader (e.g., a single combined shader) by receiving a vertex shader and a fragment shader as inputs. Additionally, the image data processing apparatus 300 may generate one shader by receiving a vertex shader, a fragment shader, and components as inputs. Here, the components received as inputs may include indispensable color components as RGBG pentile, but the example embodiments are not limited thereto.

In operation S1110, the image data processing apparatus 300 according to at least one example embodiment obtains a plurality of inputs to be used to perform shading.

For example, the image data processing apparatus 300 may obtain various shaders, such as a second vertex shader and a second fragment shader, etc., and data regarding components related thereto.

In operation S1120, the image data processing apparatus 300 according to at least one example embodiment determines whether all components corresponding to the plurality of inputs obtained in operation S1110 are needed.

For example, the image data processing apparatus 300 may determine whether a first shader, e.g., the second fragment shader, needs data regarding all of the components provided by the second shader, e.g., the second vertex shader. When the second fragment shader needs the data regarding all the components provided by the second vertex shader, the image data processing apparatus 300 may perform linking between the second vertex shader and the second fragment shader. When the second fragment shader does not need the data regarding all of the components provided by the second vertex shader, the image data processing apparatus 300 may perform an operation for optimization through operations S1130 to S1160 before linking is performed between the second vertex shader and the second fragment shader.

For example, when data provided by the second vertex shader is data regarding the red component and the green component, and data provided by the second fragment shader is also the data regarding the red component and the green component, the image data processing apparatus 300 may directly perform linking between the second vertex shader and the second fragment shader. As another example, when data provided by the second vertex shader is data regarding the red component, the green component, and the blue component and data provided by the second fragment shader is data regarding the red component and the green component, the image data processing apparatus 300 may perform an operation for optimization through operations 1130 to S1160.

The image data processing apparatus 300 according to at least one example embodiment may call an existing link when all components corresponding to the plurality of inputs obtained in operation S1110 are needed. For example, when the input components include all RGBA components, the image data processing apparatus 300 may directly call the existing link.

In operation S1130, the image data processing apparatus 300 according to at least one example embodiment determines whether one or more components are not to be used in the fragment shader (and/or other shader) among all of the components corresponding to the plurality of inputs obtained in operation S1110.

For example, the image data processing apparatus 300 may check whether there is data regarding components which are not needed by the second shader (e.g., second fragment shader) by investigating the second shader (e.g., second fragment shader).

As another example, when data provided by the second vertex shader is data regarding the red component, the green component, and the blue component, and data provided by the second fragment shader is data regarding the red component and the green component and not the blue component, the image data processing apparatus 300 may determine that the second fragment shader does not need the data regarding the blue component.

When specific components are excluded, the image data processing apparatus 300 according to at least one example embodiment may check whether there are operations for components which may be excluded in the fragment shader. Furthermore, the image data processing apparatus 300 may remove, from the fragment shader, the operations for the components determined to be excluded as a result of the checking. The image data processing apparatus may use "Def-use-chain" information of a compiler to determine operations related to the specific components. The image data processing apparatus 300 may call the existing link after the unnecessary operations are removed.

In operation S1140, the image data processing apparatus 300 according to at least one example embodiment determines whether operations for components which are not used in the shader (e.g., fragment shader, etc.) are included in the shader.

For example, the image data processing apparatus 300 may check whether unnecessary operations are included in the second fragment shader, but the example embodiments are not limited thereto.

In operation S1150, the image data processing apparatus 300 according to at least one example embodiment performs braiding on two fragments.

According to at least one example embodiment, braiding may be understood as a coupling method wherein multiple independent threads, operations and/or tasks may be associated with each other and performed by at least one processor (e.g., a GPU) in parallel.

For example, the image data processing apparatus 300 may perform braiding on a first thread to be used to shade a current pixel and a second thread to be used to shade a neighboring pixel, but the example embodiments are not limited thereto.

In operation S1160, the image data processing apparatus 300 according to at least one example embodiment removes unnecessary operations included in the fragment shader.

For example, when the current pixel does not include the blue component, the image data processing apparatus 300 may remove, from the fragment shader, an operation to be used to determine a value of the blue component of the current pixel.

For a method of removing unnecessary operations, FIGS. 3 to 9 may be referred to.

In operation S1170, the image data processing apparatus 300 according to at least one example embodiment performs linking between the vertex shader and the fragment shader.

Since the unnecessary operations are removed, the image data processing apparatus 300 may reduce the waste of resources caused by the unnecessary operations when the shading is performed by the fragment shader.

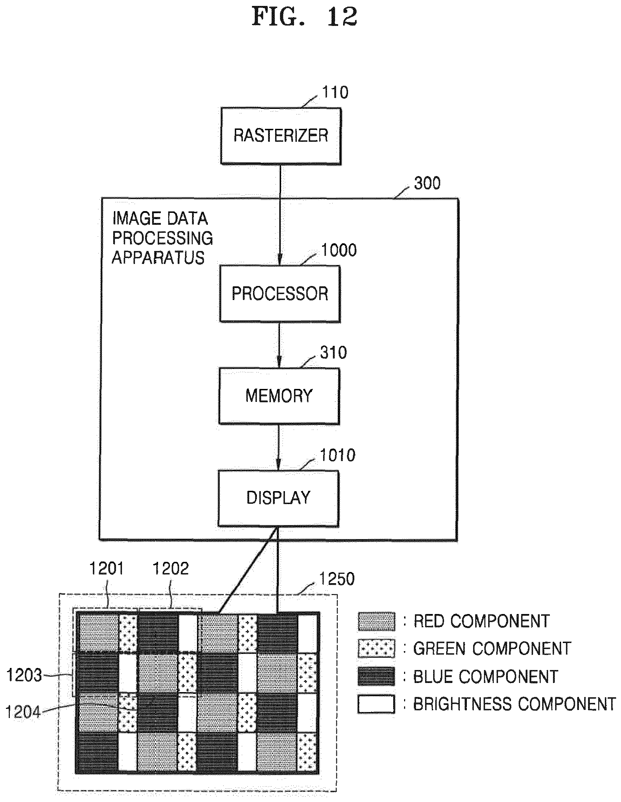

FIG. 12 is a diagram illustrating displaying a current pixel and a neighboring pixel according to the RGBW pentile display method, performed by an image data processing apparatus 300, according to at least one example embodiment.

Referring to FIG. 12, the image data processing apparatus 300 may include a processor 1000, a memory 310, and a display 1010. FIG. 12 illustrates only elements of the image data processing apparatus 300 related to the present embodiment. It would be apparent to those of ordinary skill in the art that the image data processing apparatus 300 is not limited thereto and may further include other general-purpose elements, as well as the elements of FIG. 12, etc.

According to at least one example embodiment, the processor 1000 may receive data regarding a fragment (and/or a pixel) from a rasterizer 110. For example, the processor 1000 may receive data regarding at least one color component, such as a red component, a green component, a blue component, a transparency component, and a brightness component, etc., to be used to determine values of pixels.

According to at least one example embodiment, the processor 1000 may delete operations for determining values of components not to be used to display a current pixel 1201 and/or at least one neighboring pixel 1202 among a plurality of operations to be used during performing vertex shading and/or fragment shading on the current pixel 1201 and/or the at least one neighboring pixel 1202, and/or perform marking on the operations. The processor 1000 may determine values of the current pixel 1201 and/or the at least one neighboring pixel 1202 by using the operations which are not deleted or on which marking is not performed among the plurality of operations. Furthermore, the processor 1000 may determine the values of the current pixel 1201 and/or the at least one neighboring pixel 1202 by performing an operation included in a combined thread including additional threads, such as a third thread having an operation for the current pixel 1201, and a fourth thread having an operation for the neighboring pixel 1202, etc.

For example, when the current pixel 1201 includes the red component and the green component, the processor 1000 may delete an operation to be used to determine only a value of unused components, such as the blue component or the brightness component, etc., of the current pixel 1201 among operations included in the third thread, and determine the values of the red component and the green component of the current pixel 1201 by using the operations which are not deleted. When the neighboring pixel 1202 includes the blue component and the brightness component and the value of the brightness component cannot be determined using the values of the red component, the green component, and the blue component, the processor 1000 may delete an operation to be used to determine only a value of the red component or the green component of the neighboring pixel 1202 among operations included in the fourth thread, and determine the values of the blue component and the brightness component of the neighboring pixel 1202 by using the operations which are not deleted.

The values of the components of the current pixel 1201 and/or the at least one neighboring pixel 1202 determined by the processor 1000 may be stored in the memory 310. For example, the values of the neighboring pixel 1202 may be stored in the memory 310 while the current pixel 1201 is displayed.

The display device 1010 may display the current pixel 1201 and/or the neighboring pixel 1202 by receiving the values of the color components stored in the memory 310. For example, the display device 1010 may display a 4x4 pixel screen 1250 according to the RGBW pentile display method, but is not limited thereto.

In at least one example embodiment, a pixel on which shading is being performed is a first pixel 1203, the processor 1000 may delete an operation to be used to determine only the value of the red component or the green component of the first pixel 1203, and determine the values of the blue component and the brightness component of the first pixel 1203 by using operations which are not deleted. In this case, a neighboring pixel of the first pixel 1203 may be a second pixel 1204, etc.

As described above, a method of performing marking on operations to be used to determine only values of components not included in a current pixel among operations for shading the current pixel and performing shading on the current pixel by using non-marked operations is applicable to all cases in which the current pixel includes at least one color component of a plurality of color components, such as a red component, a green component, a blue component, a brightness component, and a transparency component, etc.

For example, an image data processing method as described above is applicable to when the current pixel includes the red component, the green component, and the transparency component and at least one neighboring pixel includes a blue component and the transparency component, when the current pixel includes the red component and the green component and the at least one neighboring pixel includes the blue component, when the current pixel includes the red component, the green component, and the transparency component and the at least one neighboring pixel includes the red component, the green component, the blue component, and the transparency component, and when the current pixel includes the red component and the green component and the at least one neighboring pixel includes the red component, the green component, and the blue component, etc.

A texture processing method as described above may be embodied as a computer program including computer readable instructions, which is executable in a computer and/or at least one processor, by using a non-transitory computer-readable recording medium. Examples of the non-transitory computer-readable recording medium include a magnetic storage medium (e.g., a read-only memory (ROM), a floppy disk, a hard disc, etc.), an optical storage medium (e.g., a compact-disc (CD) ROM, a DVD disk, a Blu-ray disk, etc.), a solid state drive, flash memory, etc.

As is traditional in the field of the inventive concepts, various example embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar processing devices, they may be programmed using software (e.g., microcode) to perform various functions discussed herein and may optionally be driven by firmware and/or software, thereby transforming the microprocessor or similar processing devices into a special purpose processor. Additionally, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the scope of the inventive concepts. Further, the blocks, units and/or modules of the embodiments may be physically combined into more complex blocks, units and/or modules without departing from the scope of the inventive concepts.

## Claims

1. A method of processing image data, the method comprising:
receiving, using at least one processor, a plurality of image data inputs to be used to perform three-dimensional (3D) shading ;
determining, using the at least one processor, at least one color component to be used to display a current pixel among a plurality of color components to be used to determine color values of pixels comprising the current pixel based on the received plurality of image data inputs;
determining, using the at least one processor, a value of the at least one color component by using at least one operation among a plurality of operations for the plurality of image data inputs, the at least one operation associated with the at least one color component; and
displaying, using the at least one processor, the current pixel by using the color value of the at least one color component on a display device.

2. The method of claim 1, wherein the determining the value of the at least one color component comprises:
receiving a plurality of operations to be used to perform the 3D shading on the current pixel;
marking operations related to color components not included in the current pixel among the plurality of received operations; and
determining the value of the at least one color component by using non-marked operations among the plurality of obtained operations.

3. The method of claim 1, wherein the value of the at least one color component is determined using a combined thread obtained by combining a first thread for displaying the current pixel and a second thread for displaying at least one neighboring pixel adjacent to the current pixel.

4. The method of claim 3, wherein
the plurality of color components comprise at least a red component, a green component, and a blue component;
the current pixel comprises the red component and the green component; and
the at least one neighboring pixel comprises the blue component and the green component.

5. The method of claim 4, wherein the at least one color component comprises the red component and the green component.

6. The method of claim 1, wherein the displaying of the current pixel comprises displaying the current pixel according to a pentile display technique.

7. An image data processing apparatus comprising:
at least one processor configured to,
receive a plurality of image data inputs to be used to perform three-dimensional (3D) shading,
determine at least one color component to be used to display a current pixel among a plurality of color components to be used to determine values of a plurality of pixels comprising the current pixel based on the received plurality of image data inputs, and
determine a value of the at least one color component by using at least one operation among a plurality of operations for the plurality of image data inputs, excluding operations for color components other than the at least color one component; and
a display configured to display the current pixel by using the value of the at least one color component.

8. The image data processing apparatus of claim 7, wherein the at least one processor is further configured to:
receive a plurality of operations to be used to perform shading on the current pixel;
mark at least one operation to be used to display only the excluded color components among the plurality of obtained operations; and
determine the value of the at least one color component by using the other non-marked operations among the plurality of received operations.

9. The image data processing apparatus of claim 7, wherein the value of the at least one color component is determined using a combined thread obtained by combining a first thread for displaying the current pixel and a second thread for displaying at least one neighboring pixel adjacent to the current pixel.

10. The image data processing apparatus of claim 9, wherein
the plurality of color components comprise a red component, a green component, and a blue component;
the current pixel comprises the red component and the green component; and
the at least one neighboring pixel comprises the blue component and the green component.

11. The image data processing apparatus of claim 10, wherein the at least one color component comprises the red component and the green component.

12. The image data processing apparatus of claim 7, wherein the display is configured to display the current pixel according to a pentile display technique.

13. The image data processing apparatus of claim 10, wherein the plurality of color components further comprise at least one of:
a transparency component; and
a brightness component.

14. The image data processing apparatus of claim 9, wherein
the plurality of color components comprise a red component, a green component, a blue component, and a brightness component;
the current pixel comprises the red component and the green component; and
the at least one neighboring pixel comprises the blue component and the brightness component.

15. The image data processing apparatus of claim 7, wherein the 3D shading comprises at least one of:
vertex shading; and
fragment shading.

16. A non-transitory computer-readable recording medium having recorded thereon a program including computer readable instructions, which when executed by at least one processor, causes the at least one processor to perform the method of claim 1.

17. A method of performing three-dimensional (3D) processing of image data, the method comprising:
receiving, using at least one processor, image data inputs related to an image to be 3D shaded, the image data inputs including data related to color components associated with at least one pixel of the image data and a first shader and a second shader;
determining, using the at least one processor, which of the color components are necessary to display the at least one pixel based on the second shader;
selecting, using the at least one processor, at least one operation of a plurality of operations associated with the second shader based on the determined necessary color components of the second shader;
generating, using the at least one processor, a combined shader based on the first shader and the second shader, the combined shader including the selected at least one operation;
shading, using the at least one processor, the at least one pixel based on the combined shader; and
displaying, using the at least one processor, the shaded at least one pixel on a display device.

18. The method of claim 17, wherein the first shader is a vertex shader and the second shader is a fragment shader.

19. The method of claim 17, wherein the display device is a pentile display device including a plurality of pixels, each of the plurality of pixels including at least a red component, a blue component, and a green component.

20. The method of claim 17, wherein the generating the combined shader includes braiding a plurality of threads, each of the plurality of threads used to shade at least one pixel of the image data.
